(19) Europäisches Patentamt
European Patent Office
Office européen des brevets

(11) **EP 4 266 423 A1**

(12) **EUROPEAN PATENT APPLICATION**
published in accordance with Art. 153(4) EPC

(43) Date of publication:
**25.10.2023 Bulletin 2023/43**

(21) Application number: **21911452.7**

(22) Date of filing: **20.12.2021**

(51) International Patent Classification (IPC):
**H01M 4/525** $^{(2010.01)}$    **H01M 4/505** $^{(2010.01)}$
**H01M 10/052** $^{(2010.01)}$

(52) Cooperative Patent Classification (CPC):
**H01M 4/505; H01M 4/525; H01M 10/052;**
Y02E 60/10

(86) International application number:
**PCT/KR2021/019438**

(87) International publication number:
**WO 2022/139385 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2020  KR 20200179685**

(71) Applicants:
• **POSCO Holdings Inc.**
**Seoul 06194 (KR)**
• **RESEARCH INSTITUTE OF INDUSTRIAL
SCIENCE &
TECHNOLOGY
Pohang-si, Gyeongsangbuk-do 37673 (KR)**
• **POSCO Chemical Co., Ltd
Gyeongsangbuk-do 37918 (KR)**

(72) Inventors:
• **SONG, Jung Hoon**
**Gwacheon-si, Gyeonggi-do 13835 (KR)**
• **NAM, Sang Cheol**
**Seoul 02587 (KR)**
• **LEE, Sanghyuk**
**Incheon 22405 (KR)**
• **CHOI, Kwon Young**
**Seoul 07987 (KR)**
• **PARK, Inchul**
**Incheon 22008 (KR)**
• **KWON, Ohmin**
**Incheon 22018 (KR)**

(74) Representative: **Potter Clarkson**
**Chapel Quarter
Mount Street
Nottingham NG1 6HQ (GB)**

(54) **CATHODE ACTIVE MATERIAL AND LITHIUM SECONDARY BATTERY INCLUDING SAME**

(57)    The present exemplary embodiments relate to a positive electrode active material and a lithium secondary battery including the same. According to an exemplary embodiment, a positive electrode active material for a lithium secondary battery including a metal oxide particle including nickel, cobalt, manganese and aluminum, and two types of doping elements doped on the metal oxide particle is provided.

EP 4 266 423 A1

**Description**

**Field of the Invention**

The present exemplary embodiments relate to a positive electrode active material and a lithium secondary battery including the same.

**Description of the Related Art**

Recently, due to the explosive demand for electric vehicles and the demand for increased mileage, the development of secondary batteries with high-capacity and a high energy density that can be applied to them is actively progressing worldwide. Particularly, in order to manufacture such a high-capacity battery, a high-capacity positive electrode active material must be used. Accordingly, a method of applying a nickel-cobalt-manganese based positive electrode active material having a high nickel content as a high-capacity positive electrode active material has been proposed. However, the nickel cobalt manganese positive electrode active material with high nickel content resultantly as the nickel content increases, has problems below. 1) efficiency reduction due to capacity reduction

2) formation of NiO rock salt structure due to surface oxygen generation and cycle characteristics deteriorated, and 3) resistance increase. Therefore, it is urgent to develop a positive electrode active material that can solve the problem of a nickel cobalt manganese positive electrode active material with a high nickel content.

**SUMMARY OF THE INVENTION**

In the present embodiment, metal oxide particles including nickel, cobalt, manganese and aluminum are doped with two types of elements to solve the problem of performance deteriorated in positive electrode active materials with high nickel content and to significantly improve electrochemical characteristics at the same time. Accordingly, it is intended to provide a positive electrode active material and a lithium secondary battery containing it.

A positive electrode active material for a lithium secondary battery according to an exemplary embodiment may include a metal oxide particle including nickel, cobalt, manganese, and aluminum, and two types of doping elements doped on the metal oxide particle.

The two doping elements are Nb and Zr.

A doping amount of the Nb is 0.0001 mol to 0.01 mol, based on 1 mol of the total of nickel, cobalt, manganese, aluminum and doping elements.

A doping amount of the Zr is 0.001 mol to 0.007 mol, based on 1 mol of the total of nickel, cobalt, manganese, aluminum and doping elements.

A doping amount of the Nb and Zr satisfies the relationship of Equation 1 below.

$$[\text{Equation 1}]$$

$$0.3 < [\text{Zr}]/[\text{Nb}] < 40$$

(In Equation 1, [Nb] and [Zr] mean the doping amount of each element based on 1 mole of the total sum of nickel, cobalt, manganese, aluminum and doping elements)

the positive electrode active material is represented by Chemical Formula 1 below.

[Chemical Formula 1]      $\text{Li}_a[\text{Ni}_x\text{Co}_y\text{Mn}_z\text{Al}_h]_{1-t}(\text{Nb}_i\text{Zr}_j)_t\text{O}_{2-p}\text{X2}_p$

(In the Chemical Formula 1,

X is one or more elements selected from the group containing F, N, and P,
a is $0.8 \leq a \leq 1.3$,
t is $0.0011 \leq t \leq 0.007$,
$0.6 \leq x \leq 0.95$, $0 < y \leq 0.2$, $0 < z \leq 0.2$, $0.008 \leq h \leq 0.029$, $0.0011 \leq i \leq 0.017$, $0.9989 \leq j \leq 0.983$, and $0 \leq p \leq 0.02$)

The h is in the range of $0.01 \leq h \leq 0.025$.

The initial diffusion coefficient of the positive electrode active material ranged from $7.30 \times 10^{-9} \text{m}^2/\text{sec}$ to $8.10 \times 10^{-9} \text{m}^2/\text{sec}$.

A grain size of the metal oxide particle ranges from 900A to 1,550A.

A full width at half maximum (FWHM) value for (110) planes of the metal oxide particle ranges from 0.1890 to 0.2200.

When measuring the X-ray diffraction pattern, the positive electrode active material has a 1.2300 to 1.2410 of I(003)/I(104), which is the ratio of the peak intensity of the (003) plane to the peak intensity of the (104) plane.

The content of nickel in the metal oxide particle is 0.8 mol or more, based on 1 mol of the total of the nickel, cobalt, manganese, and aluminum.

A lithium secondary battery according to another exemplary embodiment may include a positive electrode including a positive electrode active material according to an exemplary embodiment, a negative electrode, and a non-aqueous electrolyte.

When the positive electrode active material according to the present embodiment is applied by doping at least two elements to a metal oxide particle including NCMA, it can significantly improve the room temperature I high temperature cycle-life characteristic, initial efficiency, initial resistance, resistance increase rate and thermal stability, while increasing the capacity of a lithium secondary battery.

## DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including/comprising" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art document and the currently disclosed contents and are not interpreted as ideal or formal meaning unless defined.

A positive electrode active material for a lithium secondary battery according to an exemplary embodiment may include a metal oxide particle including nickel, cobalt, manganese, and aluminum, and two types of doping elements doped on the metal oxide particle.

At this time, the two types of doping elements may be Nb and Zr.

Selection of the doping element is important to secure cycle-life and various electrochemical performance by doping lithium metal oxide. Doping elements known to date include monovalent ions such as $Ag^+$ and $Na^+$; and divalent or multi-valent ions such as $Co^{2+}$, $Cu^{2+}$, $Mg^{2+}$, $Zn^{2+}$, $Ba^{2+}$, $Al^{3+}$, $Fe^{3+}$, $Cr^{3+}$, $Ga^{3+}$, $Zr^{4+}$, $Ti^{4+}$. Each of these elements has a different effect on the cycle-life and output characteristics of the battery.

In the present embodiment, by including Nb and Zr among these doping elements, it is possible to improve room temperature and high temperature cycle-life characteristics and thermal stability, and improve initial capacity and initial efficiency while securing high capacity.

Specifically, $Zr^{4+}$ serves as a kind of pillar because Zr ion occupies the Li site, and it relieves the contraction of the lithium ion path during the charging and discharging process to bring about stabilization of the layered structure. This phenomenon can increase cycle-life by reducing cation mixing and increasing lithium diffusion coefficient.

Nb can improve the cycle-life characteristic and effectively reduce the resistance increase rate simultaneously.

In the present embodiment, the doping amount of the Nb is 0.0001 mol to 0.01 mol, more specifically, 0.00025 mol to 0.01 mol or 0.0005 mol to 0.0025 mol, based on 1 mol of the total of nickel, cobalt, manganese, aluminum and doping elements. When the doping amount of Nb satisfies the range, a very advantageous effect can be implemented in that room temperature cycle-life, high temperature cycle-life and average leakage current values of a lithium secondary battery can all be improved. In addition, the diffusion coefficient of the lithium secondary battery increases and the resistance increase rate can be effectively reduced during impedance analysis.

Next, the doping amount of the Zr may range from 0.001 mol to 0.007 mol, more specifically, from 0.002 mol to 0.005 mol or 0.0035 mol to 0.005 mol, based on 1 mol of the total of nickel, cobalt, manganese, aluminum and doping elements. If the Zr doping amount satisfies the range, the high temperature cycle-life and room temperature cycle-life characteristics of the lithium secondary battery can be significantly improved.

In the present embodiment, the doping amount of the Nb and Zr may satisfy the relationship of Equation 1 below.

$$[\text{Equation 1}]$$

$$0.3 \leq [\text{Zr}]/[\text{Nb}] \leq 40$$

In Equation 1, [Nb] and [Zr] mean the doping amount of each element based on 1 mole of the total sum of nickel, cobalt, manganese, aluminum and doping elements.

More specifically, Equation 1 may be a range of 0.35 or more and 35 or less, 0.7 or more and 14 or less, or 1.4 or more and 7 or less.

When Equation 1 satisfies the range, the surface conductivity improvement effect and the surface protective film effect of the positive electrode material of Zr and Nb are improved, and the room temperature initial capacity and high temperature cycle-life are improved.

A positive electrode active material for a lithium secondary battery in the present embodiment may be expressed as Chemical Formula 1 below.

[Chemical Formula 1] $\quad Li_a[Ni_xCo_yMn_zAl_h]_{1-t}(Nb_iZr_j)_tO_{2-p}X2_p$

In the Chemical Formula 1,

X is one or more elements selected from the group containing F, N, and P,
a is $0.8 \leq a \leq 1.3$,
t is $0.0011 \leq t \leq 0.007$,
$0.6 \leq x \leq 0.95$, $0 < y \leq 0.2$, $0 < z \leq 0.2$, $0.008 \leq h \leq 0.029$, $0.0011 \leq i \leq 0.017$, $0.9989 \leq j \leq 0.983$, and $0 \leq p \leq 0.02$)

In the present exemplary embodiment, the Al content range h may be 0.008 to 0.029, and more specifically, may be in the range of $0.01 \leq h \leq 0.025$. If the content of Al satisfies the range, it is possible to implement a lithium secondary battery with excellent initial efficiency and thermal stability, and significantly improved room temperature cycle-life and high temperature cycle-life.

In addition, the content of the nickel in the present exemplary embodiment may be 0.8 mol or more, more specifically, 0.8 mol to 0.99 mol, 0.82 mol to 0.95 mol, or, or 0.83 mol to 0.92 mol based on 1 mol of the total of the nickel, cobalt, manganese, and aluminum.

As in the present embodiment, a positive electrode active material having a high power characteristic can be realized when the content of nickel is 0.8 or more based on 1 mol of the total of the nickel, cobalt, manganese, and aluminum in the metal oxide. Since the positive electrode active material of the present exemplary embodiment having such a composition has a high energy density per volume, the capacity of a battery to which it is applied can be improved, and is also suitable for use in an electric vehicle.

On the other hand, the initial diffusion coefficient of the positive electrode active material according to the present embodiment is $7.30*10^{-9}m^2/sec$ to $8.10*10^{-9}m^2/sec$, more specifically $7.57*10^{-9}m^2/sec$ to $8.05*10^{-9}m^2$ sec range, $7.60*10^{-9}m^2/sec$ to $8.05*10^{-9}m^2/sec$, or $7.86*10^{-9}m^2/sec$ to $8.05*10^{-9}m^2/sec$. When the initial diffusion coefficient is satisfied the range, the movement of Li ion in the positive electrode material is effective, resulting in a high initial capacity and rate characteristic of the positive electrode material. On the other hand, if the diffusion coefficient is less than $7.57*10^{-9}m^2/sec$, the resistance in the positive electrode material increases, and as a result, the cycle characteristic is greatly reduced. In addition, when the diffusion coefficient exceeds $8.05*10^{-9}m^2/sec$, the structural instability increases and the cycle characteristic deteriorates.

Next, the grain size of the metal oxide particle may be in the range of 900A to 1,550A, more specifically, in the range of 950A to 1,500A, 1,050A to 1,432A, and more specifically, in the range of 1,050A to 1,287A. When the grain size satisfies the range, the high temperature cycle-life is improved without reducing the initial capacity.

Also, the full width at half maximum (FWHM) value for the (110) plane of the metal oxide particle may range from 0.1890 to 0.2200, more specifically from 0.1895 to 0.2041, or 0.1916 to 0.2041. When the full width at half maximum (FWHM) value for the (110) plane satisfies the range, it has a characteristic that the high temperature cycle-life is greatly improved.

When measuring the X-ray diffraction pattern, the positive electrode active material has a 1.2300 to 1.2410, 1.2315 to 1.2406, or 1.2330 to 1.2406 of I(003)/I(104), which is the ratio of the peak intensity of the (003) plane to the peak intensity of the (104) plane.

In general, a peak intensity value means a peak height value or an integral area value obtained by integrating a peak area, and in the present embodiment, the peak intensity value means a peak area value.

If the peak intensity ratio I(003)/I(104) is included in the range, structural stabilization is promoted without a decrease in capacity, and the thermal safety of the positive electrode active material can be improved.

In addition, the peak intensity ratio I(003)/I(104) is a cation mixing index, and when the value of I(003)/I(104) decreases, the initial capacity and rate characteristic of the positive electrode active material may be deteriorated. However, in the present exemplary embodiment, since I(003)/I(104) satisfies the range of 1.220 to 1.240, an excellent positive electrode active material can be realized with capacitance and rate characteristics.

On the other hand, the positive electrode active material of the present exemplary embodiment may be a bi-modal form in which large-diameter particles and small-diameter particles are mixed. The large-diameter particles may have an average particle diameter D50 ranging from 10 $\mu$m to 20 $\mu$m, and the small-diameter particles may have an average particle diameter D50 ranging from 3 $\mu$m to 7 $\mu$m. At this time, of course, the large-diameter particle and the small-diameter particle may also be in the form of a secondary particle in which at least one primary particle is assembled. In addition, the mixing ratio of large-size particles and small-size particles may be 50 to 80 wt% of large-size particles based on entire 100 wt%. Due to this bimodal particle distribution, energy density can be improved.

In another exemplary embodiment, it provides a lithium secondary battery comprising:

a positive electrode including a positive electrode active material according to one embodiment of the present invention, a negative electrode including a negative electrode active material, and an electrolyte positioned between the positive electrode and the negative electrode.

A description related to the positive electrode active material will be omitted because it is the same as that of an exemplary embodiment described above.

The positive electrode active material layer may include a binder and a conductive material.

The binder serves to attach the positive electrode active material particles well to each other and to attach the positive electrode active material to the current collector well.

The conductive material is used to impart conductivity to the electrode, and any electronic conductive material can be used without causing chemical change in the battery.

The negative electrode includes a current collector and a negative electrode active material layer formed on the current collector, and the negative electrode active material layer includes a negative electrode active material.

The negative electrode active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material. In a lithium ion secondary battery, any generally-used carbon-based negative electrode active material can be used, and typical examples thereof are crystalline carbon and amorphous carbon, or combination thereof.

The alloy of the lithium metal is alloy of lithium and metal selected from the group consisting of Na, K, Rb, Cs, Fr, Be, Mg, Ca, Sr, Si, Sb, Pb, In, Zn, Ba, Ra, Ge, Al and Sn.

Materials capable of doping and undoping the lithium include Si, SiO$_x$ (0 < x < 2), Si-Y alloy (the Y is an element selected from the group consisting of an alkali metal, an alkaline earth metal, a group 13 element, a group 14 element, a transition metal, and a rare earth, and its combination thereof, but not Si), Sn, SnO$_2$, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide. The negative electrode active material layer also includes a binder and may optionally further include a conductive material.

The binder serves to attach the negative electrode active material particles well to each other and to attach the negative electrode active material to the current collector well.

The conductive material is used to impart conductivity to the electrode, and any electronic conductive material can be used without causing chemical change in the battery.

As the current collector, one selected from the group consisting of copper foil, nickel foil, stainless steel foil, titanium foil, nickel foam, copper foam, a conductive metal-coated polymer substrate, and a combination thereof may be used.

The negative electrode and positive electrode are prepared by mixing active material, conductive material and binder in a solvent to prepare an active material composition, and applying this composition to a current collector. Since such an electrode manufacturing method is widely known in the field, detailed description will be omitted in this specification. As the solvent, N-methylpyrrolidone and the like can be used, but is not limited thereto.

The electrolyte contains a non-aqueous organic solvent and a lithium salt.

The non-aqueous organic solvent serves as a medium through which ions involved in the electrochemical reaction of the battery can move.

The lithium salt is a material that dissolves in an organic solvent and acts as a supply source of lithium ion in the battery to enable basic operation of the lithium secondary battery and promotes the movement of lithium ion between the positive electrode and the negative electrode.

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, a mixed multilayer such as a polyethylene/polypropylene/polyethylene 3-layer separator, polypropylene/polyethylene/polypropylene 3-layer separator, can be used.

Lithium secondary batteries can be classified into lithium ion batteries, lithium ion polymer batteries and lithium polymer batteries according to the type of separator and electrolyte used, and can be classified into cylindrical, prismatic, coin-type, and pouch-type depending on the shape. It can be divided into bulk type and thin film type according to size. Since the structures and manufacturing methods of these batteries are well known in this field, detailed descriptions are omitted.

Hereinafter, an exemplary embodiment will be described in detail. However, this is presented as an example, and the present invention is not limited thereby, and the present invention is only defined by the range of claims to be described later.

**Preparation Example 1 - Preparation of NCM Precursor**

The positive electrode active material precursor was prepared by a general co-precipitation method.

$NiSO_4 \cdot 6H_2O$ was used as the nickel raw material, $CoSO_4 \cdot 7H_2O$ as the cobalt raw material, and $MnSO_4 \cdot H_2O$ as the manganese raw material. These raw materials were dissolved in distilled water to prepare a metal salt aqueous solution.

After preparing the co-precipitation reactor, $N_2$ was purged to prevent oxidation of metal ions during the co-precipitation reaction, and the temperature of the reactor was maintained at 50°C.

$NH_4(OH)$ was added to the co-precipitation reaction as a chelating agent, and NaOH was used for pH control. The precipitate obtained by the co-precipitation pr°Cess was filtered, washed with distilled water, and then dried in a cake dryer at 180°C to prepare a positive electrode active material precursor.

The composition of the prepared precursor was $(Ni_{0.92}Co_{0.04}Mn_{0.04})(OH)_2$, the average particle diameter D50 of the large-size precursor was 14.3 μm, and the average particle diameter D50 of the small-size precursor was 4.5 μm.

**Exemplary embodiment 1 - 0.0035 mol Zr + 0.0001 mol Nb doped**

A mixture obtained by uniformly mixing the precursor prepared in the Preparation Example 1, lithium raw material, aluminum raw material and doping raw material was sintered in an oxygen atmosphere in a tube furnace. The sintering condition was maintained at 480°C for 5 hours and then at 740-780°C for 15 hours, and the heating speed was 5°C/min.

$LiOH\ H_2O$ (Samjeon Chemical, battery grade) was used as the lithium raw material used, $Al(OH)_3$ (Aldrich, 3N) was used as the aluminum raw material, and $ZrO_2$ (Aldrich, 3N), and $Nb_2O_5$ (Aldrich, 3N) were used as the doping raw materials.

At this time, the doping amount is expressed as $M = Ni_{0.90}Co_{0.04}Mn_{0.04}Al_{0.02}$ based on $LiNi_{0.90}Co_{0.04}Mn_{0.04}Al_{0.02}O_2$, which is not doped with the metal element, and the amount of doping material is adjusted so that M and the total amount of doping are 1 mol. That is, it has a $Li(M)_{1-x}(D)_xO_2$ (M=NCMA, D=doping material) structure. The entire composition of the large particle size and small particle size positive electrode active materials doped with the two elements prepared in this way was $Li(M)_{0.9964}Zr_{0.0035}Nb_{0.0001}O_2$.

The sintered large particle size and small particle size positive electrode active material is uniformly mixed at a weight ratio of 80:20 (large particle size-small particle size) to obtain the positive electrode active material of Example 1 in a bi-modal form.

**Comparative Example 1 - NCMA + Zr Doping**

A positive electrode active material in a bimodal form was prepared by the same method as in the exemplary embodiment 1, except that the amount of doping was adjusted using the precursor prepared in Preparation Example 1.

The entire composition of the large and small particle size positive electrode active materials prepared according to Comparative Example 1 was $Li(M)_{0.9965}Zr_{0.0035}O_2$.

**Exemplary embodiment 2 - doped with 0.0035 mol Zr and 0.00025 mol Nb**

A positive electrode active material in a bimodal form was prepared in the same manner as in the exemplary embodiment 1, except that the amount of the doping material was adjusted using the precursor prepared in Preparation Example 1.
The entire composition of the positive electrode active material prepared according to exemplary embodiment 2 was $Li(M)_{0.99625}Zr_{0.0035}Nb_{0.00025}$.

**Exemplary embodiment 3 - doped with 0.0035 mol Zr and 0.0005 mol Nb**

A positive electrode active material in a bimodal form was prepared by the same method as in the exemplary embodiment 1, except that the amount of the doping material was adjusted using the precursor prepared in Preparation Example 1.
The entire composition of the positive electrode active material prepared according to exemplary embodiment 3 was $Li(M)_{0.996}Zr_{0.0035}Nb_{0.0005}$.

**Example embodiment 4 - doped with 0.0035 mol Zr and 0.001 mol Nb**

A positive electrode active material in a bimodal form was prepared by the same method as in the exemplary embodiment 1, except that the amount of the doping material was adjusted using the precursor prepared in Preparation Example 1.
The entire composition of the positive electrode active material prepared according to exemplary embodiment 4 was $Li(M)_{0.9955}Zr_{0.0035}Nb_{0.001}$.

**Exemplary embodiment 5 - 0.0035 mol Zr + 0.0025 mol Nb doped**

A positive electrode active material in a bimodal form was prepared in the same manner as in the exemplary embodiment 1, except that the amount of the doping material was adjusted using the precursor prepared in Preparation Example 1.
The entire composition of the positive electrode active material prepared according to exemplary embodiment 5 was $Li(M)_{0.994}Zr_{0.0035}Nb_{0.0025}$.

**Reference Example 1 - 0.0035 mol Zr + 0.005 mol Nb**

A positive electrode active material in a bimodal form was prepared in the same manner as in the exemplary embodiment 1, except that the amount of the doping material was adjusted using the precursor prepared in Preparation Example 1.
The entire composition of the positive electrode active material prepared according to Reference Example 1 was $Li(M)_{0.9915}Zr_{0.0035}Nb_{0.005}$.

**Reference Example 2 - 0.0035 mol Zr + 0.01 mol Nb**

A positive electrode active material in a bimodal form was prepared by the same method as in the exemplary embodiment 1, except that the amount of the doping material was adjusted using the precursor prepared in Preparation Example 1.
The entire composition of the positive electrode active material prepared according to Reference Example 2 was $Li(M)_{0.9865}Zr_{0.0035}Nb_{0.01}$.

**Exemplary embodiment 6 - doped with 0.002 mol Zr and 0.0025 mol Nb**

A positive electrode active material in a bimodal form was prepared by the same method as in the exemplary embodiment 1, except that the amount of the doping material was adjusted using the precursor prepared in Preparation Example 1.
The entire composition of the positive electrode active material prepared according to exemplary embodiment 6 was $Li(M)_{0.9955}Zr_{0.002}Nb_{0.0025}$.

**Example embodiment 7 - doped with 0.005 mol Zr and 0.0025 mol Nb**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to exemplary embodiment 7 was $Li(M)_{0.9925}Zr_{0.005}Nb_{0.0025}$.

**Reference Example 3 - 0.008 mol Zr + 0.0025 mol Nb**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to Reference Example 3 was $Li(M)_{0.9895}Zr_{0.008}Nb_{0.0025}$.

**Reference Example 4 - 0.0035 mol Zr + 0.0025 mol Nb + 0.005 mol Al**

A positive electrode active material in a bimodal form was manufactured by the same method as in the illustrated embodiment 1, except that the amount of the aluminum raw material and the amount of the doping material were adjusted using the precursor prepared in Preparation Example 1.

The entire composition of the positive electrode active material prepared according to Reference Example 4 was $Li(Ni_{0.915}Co_{0.04}Mn_{0.04}Al_{0.005})_{0.994}Zr_{0.0035}Nb_{0.0025}$.

**Exemplary embodiment 8 - 0.0035 mol Zr + 0.0025 mol Nb + 0.01 mol Al**

A positive electrode active material in a bimodal form was manufactured by the same method as in the illustrated embodiment 1, except that the amount of the aluminum raw material and the amount of the doping material were adjusted using the precursor prepared in Preparation Example 1.

The entire composition of the positive electrode active material prepared according to exemplary embodiment 8 was $Li(Ni_{0.91}Co_{0.04}Mn_{0.04}Al_{0.01})_{0.994}Zr_{0.0035}Nb_{0.0025}$.

**Exemplary embodiment 9 - 0.0035 mol Zr + 0.0025 mol Nb + 0.015 mol Al**

A positive electrode active material in a bimodal form was manufactured by the same method as in the illustrated embodiment 1, except that the amount of the aluminum raw material and the amount of the doping material were adjusted using the precursor prepared in Preparation Example 1.

The entire composition of the positive electrode active material prepared according to exemplary embodiment 9 was $Li(Ni_{0.905}Co_{0.04}Mn_{0.04}Al_{0.015})_{0.994}Zr_{0.0035}Nb_{0.0025}$.

**Exemplary embodiment 10 - 0.0035 mol Zr + 0.0025 mol Nb + 0.025 mol Al**

A positive electrode active material in a bimodal form was manufactured by the same method as in the illustrated embodiment 1, except that the amount of the aluminum raw material and the amount of the doping material were adjusted using the precursor prepared in Preparation Example 1.

The entire composition of the positive electrode active material prepared according to exemplary embodiment 10 was $Li(Ni_{0.895}Co_{0.04}Mn_{0.04}Al_{0.025})_{0.994}Zr_{0.0035}Nb_{0.0025}$.

**Reference Example 5 - 0.0035 mol Zr + 0.0025 mol Nb + 0.03 mol Al**

A positive electrode active material in a bimodal form was manufactured by the same method as in the illustrated embodiment 1, except that the amount of the aluminum raw material and the amount of the doping material were adjusted using the precursor prepared in Preparation Example 1.

The entire composition of the positive electrode active material prepared according to Reference Example 5 was $Li(Ni_{0.89}Co_{0.04}Mn_{0.04}Al_{0.025})_{0.994}Zr_{0.0035}Nb_{0.0025}$.

The doping amount and entire composition of the positive electrode active material prepared according to the Comparative Example 1, Example Embodiment 1 to 12 and Reference Example 1 to 3 are shown in the following table.

(Table 1)

| | Al | Dopant | | Composition of positive electrode active material entire |
|---|---|---|---|---|
| | | Zr | Nb | |
| exemplary embodiment 1 | 0.02 | 0.0035 | 0.0001 | $Li(M)_{0.9964}Zr_{0.0035}Nb_{0.0001}O_2$ |
| Comparative Example 1 | 0.02 | 0.0035 | 0 | $Li(M)_{0.9965}Zr_{0.0035}O_2$ |
| exemplary embodiment 2 | 0.02 | 0.0035 | 0.00025 | $Li(M)_{0.99625}Zr_{0.0035}Nb_{0.00025}$ |
| exemplary embodiment 3 | 0.02 | 0.0035 | 0.0005 | $Li(M)_{0.996}Zr_{0.0035}Nb_{0.0005}$ |
| exemplary embodiment 4 | 0.02 | 0.0035 | 0.001 | $Li(M)_{0.9955}Zr_{0.0035}Nb_{0.001}$ |
| exemplary embodiment 5 | 0.02 | 0.0035 | 0.0025 | $Li(M)_{0.994}Zr_{0.0035}Nb_{0.0025}$ |
| Reference example 1 | 0.02 | 0.0035 | 0.005 | $Li(M)_{0.9915}Zr_{0.0035}Nb_{0.005}$ |
| Reference example 2 | 0.02 | 0.0035 | 0.01 | $Li(M)_{0.9865}Zr_{0.0035}Nb_{0.01}$ |
| exemplary embodiment 6 | 0.02 | 0.002 | 0.0025 | $Li(M)_{0.9955}Zr_{0.002}Nb_{0.0025}$ |
| exemplary embodiment 7 | 0.02 | 0.005 | 0.0025 | $Li(M)_{0.9925}Zr_{0.005}Nb_{0.0025}$ |
| Reference example 3 | 0.02 | 0.008 | 0.0025 | $Li(M)_{0.9895}Zr_{0.008}Nb_{0.0025}$ |
| Reference example 4 | 0.005 | 0.0035 | 0.0025 | $Li(Ni_{0.915}Co_{0.04}Mn_{0.04}Al_{0.005})_{0.994}Zr_{0.0035}Nb_{0.0025}$ |
| exemplary embodiment 8 | 0.01 | 0.0035 | 0.0025 | $Li(Ni_{0.91}Co_{0.04}Mn_{0.04}Al_{0.01})_{0.994}Zr_{0.0035}Nb_{0.0025}$ |
| exemplary embodiment 9 | 0.015 | 0.0035 | 0.0025 | $Li(Ni_{0.905}Co_{0.04}Mn_{0.04}Al_{0.015})_{0.994}Zr_{0.0035}Nb_{0.0025}$ |
| exemplary embodiment 10 | 0.025 | 0.0035 | 0.0025 | $Li(Ni_{0.895}Co_{0.04}Mn_{0.04}Al_{0.025})_{0.994}Zr_{0.0035}Nb_{0.0025}$ |
| Reference example 5 | 0.03 | 0.0035 | 0.0025 | $Li(Ni_{0.89}Co_{0.04}Mn_{0.04}Al_{0.025})_{0.994}Zr_{0.0035}Nb_{0.0025}$ |

**Comparative Example 2 - 0.78 mol Ni + 0.0035 mol Zr + 0.02 mol**

Large-size and small-size precursors having a composition of $(Ni_{0.80}Co_{0.10}Mn_{0.10})(OH)_2$ were prepared by the same method as in Preparation Example 1.

Next, a positive electrode active material in a bimodal form was prepared by the same method as in the exemplary embodiment 1, except that the amount of the doping material was adjusted using the precursor.

The entire composition of the positive electrode active material prepared according to Comparative Example 2 was $Li(Ni_{0.78}Co_{0.10}Mn_{0.10}Al_{0.02})_{0.9965}Zr_{0.0035}$.

**Comparative Example 3 - 0.81 mol Ni + 0.0035 mol Zr + 0.02 mol Al**

Large particle size and small particle size precursors having a composition of $(Ni_{0.83}Co_{0.12}Mn_{0.05})(OH)_2$ were prepared by the same method as in Preparation Example 1.

Next, a positive electrode active material in a bimodal form was prepared by the same method as in the exemplary embodiment 1, except that the amount of the doping material was adjusted using the precursor.

The entire composition of the positive electrode active material prepared according to Comparative Example 3 was $Li(Ni_{0.81}Co_{0.12}Mn_{0.05}Al_{0.02})_{0.9965}Zr_{0.0035}$.

**Comparative Example 4 - 0.83 mol Ni + 0.0035 mol Zr + 0.02 mol Al**

Large-size and small-size precursors having a composition of $(Ni_{0.85}Co_{0.075}Mn_{0.075})(OH)_2$ were prepared by the same method as in Preparation Example 1.

Next, a positive electrode active material in a bimodal form was prepared by the same method as in the exemplary embodiment 1, except that the amount of the doping material was adjusted using the precursor.

The entire composition of the positive electrode active material prepared according to Comparative Example 4 was $Li(Ni_{0.83}Co_{0.075}Mn_{0.075}Al_{0.02})_{0.9965}Zr_{0.0035}$.

**Comparative Example 5 - 0.84 mol Ni + 0.0035 mol Zr + 0.02 mol Al**

Large particle size and small particle size precursors having a composition of $(Ni_{0.86}Co_{0.07}Mn_{0.07})(OH)_2$ were prepared by the same method as in Preparation Example 1.

Next, a positive electrode active material in a bimodal form was prepared by the same method as in the exemplary embodiment 1, except that the amount of the doping material was adjusted using the precursor.

The entire composition of the positive electrode active material prepared according to Comparative Example 5 was $Li(Ni_{0.84}Co_{0.07}Mn_{0.07}Al_{0.02})_{0.9965}Zr_{0.0035}$.

**Comparative Example 6 - 0.86 mol Ni + 0.0035 mol Zr + 0.02 mol Al**

Large particle size and small particle size precursors having a composition of $(Ni_{0.88}Co_{0.05}Mn_{0.07})(OH)_2$ were prepared by the same method as in Preparation Example 1.

Next, a positive electrode active material in a bimodal form was prepared by the same method as in the exemplary embodiment 1, except that the amount of the doping material was adjusted using the precursor.

The entire composition of the positive electrode active material prepared according to Comparative Example 6 was $Li(Ni_{0.86}Co_{0.05}Mn_{0.07}Al_{0.02})_{0.9965}Zr_{0.0035}$.

**Reference Example 6 - 0.78 mol Ni + 0.0035 mol Zr + 0.0025 mol Nb + 0.02 molAl**

Large-size and small-size precursors having a composition of $(Ni_{0.80}Co_{0.10}Mn_{0.10})(OH)_2$ were prepared by the same method as in Preparation Example 1.

Next, a positive electrode active material in a bimodal form was prepared by the same method as in the exemplary embodiment 1, except that the amount of the doping material was adjusted using the precursor.

The entire composition of the positive electrode active material prepared according to Reference Example 6 was $Li(Ni_{0.78}Co_{0.01}Mn_{0.01}Al_{0.02})_{0.994}Zr_{0.0035}Nb_{0.0025}$.

**Reference Example 7 - 0.81 mol Ni + 0.0035 mol Zr + 0.0025 mol Nb + 0.02 molAl**

Large particle size and small particle size precursors having a composition of $(Ni_{0.83}Co_{0.12}Mn_{0.05})(OH)_2$ were prepared by the same method as in Preparation Example 1.

Next, a positive electrode active material in a bimodal form was prepared by the same method as in the exemplary embodiment 1, except that the amount of the aluminum raw material and the amount of the doping material were adjusted using the precursor.

The entire composition of the positive electrode active material prepared according to Reference Example 7 was $Li(Ni_{0.81}Co_{0.12}Mn_{0.05}Al_{0.02})_{0.994}Zr_{0.0035}Nb_{0.0025}$.

**Exemplary embodiment 11 - 0.83 mol Ni + 0.0035 mol Zr + 0.0025 mol Nb + 0.02 mol Al**

Large-size and small-size precursors having a composition of $(Ni_{0.85}Co_{0.075}Mn_{0.075})(OH)_2$ were prepared by the same method as in Preparation Example 1.

Next, a positive electrode active material in a bimodal form was prepared by the same method as in the exemplary embodiment 1, except that the amount of the aluminum raw material and the amount of the doping material were adjusted using the precursor.

The entire composition of the positive electrode active material prepared according to exemplary embodiment 11 was $Li(Ni_{0.83}Co_{0.075}Mn_{0.075}Al_{0.02})_{0.994}Zr_{0.0035}Nb_{0.0025}$.

**Exemplary embodiment 12 - 0.84 mol Ni + 0.0035 mol Zr + 0.0025 mol Nb + 0.02 mol Al**

Large particle size and small particle size precursors having a composition of $(Ni_{0.86}Co_{0.07}Mn_{0.07})(OH)_2$ were prepared by the same method as in Preparation Example 1.

Next, a positive electrode active material in a bimodal form was prepared by the same method as in the exemplary embodiment 1, except that the amount of the doping material was adjusted using the precursor.

The entire composition of the positive electrode active material prepared according to exemplary embodiment 12 was $Li(Ni_{0.84}Co_{0.07}Mn_{0.07}Al_{0.02})_{0.994}Zr_{0.0035}Nb_{0.0025}$.

**Exemplary embodiment 13 - 0.86 mol Ni + 0.0035 mol Zr + 0.0025 mol Nb + 0.02 mol Al**

Large particle size and small particle size precursors having a composition of $(Ni_{0.88}Co_{0.05}Mn_{0.07})(OH)_2$ were prepared by the same method as in Preparation Example 1.

Next, a positive electrode active material in a bimodal form was prepared by the same method as in the exemplary embodiment 1, except that the amount of the doping material was adjusted using the precursor.

The entire composition of the positive electrode active material prepared according to exemplary embodiment 13 was $Li(Ni_{0.86}Co_{0.05}Mn_{0.07}Al_{0.02})_{0.994}Zr_{0.0035}Nb_{0.0025}$.

The doping amount and entire composition of the Comparative Example 2 to 6 and Reference Examples 6 to 7 and Exemplary Embodiments 11 to 13 are shown in the following table.

(Table 2)

| Category | Dopant | | Composition of positive electrode active material entire |
|---|---|---|---|
| | Zr | Nb | |
| Comparative Example 2 | 0.0035 | 0 | $Li (Ni_{0.78}Co_{0.10}Mn_{0.10}Al_{0.02})_{0.9965}Zr_{0.0035}$ |
| Comparative Example 3 | 0.0035 | 0 | $Li (Ni_{0.81}Co_{0.12}Mn_{0.05}Al_{0.02})_{0.9965}Zr_{0.0035}$ |
| Comparative Example 4 | 0.0035 | 0 | $Li (Ni_{0.83}Co_{0.075}Mn_{0.075}Al_{0.02})_{0.9965}Zr_{0.0035}$ |
| Comparative Example 5 | 0.0035 | 0 | $Li (Ni_{0.84}Co_{0.07}Mn_{0.07}Al_{0.02})_{0.9965}Zr_{0.0035}$ |
| Comparative Example 6 | 0.0035 | 0 | $Li (Ni_{0.86}Co_{0.05}Mn_{0.07}Al_{0.02})_{0.9965}Zr_{0.0035}$ |
| Reference example 6 | 0.0035 | 0.0025 | $Li (Ni_{0.78}Co_{0.01}Mn_{0.01}Al_{0.02})_{0.994}Zr_{0.0035}Nb_{0.0025}$ |
| Reference example 7 | 0.0035 | 0.0025 | $Li (Ni_{0.81}Co_{0.12}Mn_{0.05}Al_{0.02})_{0.994}Zr_{0.0035}Nb_{0.0025}$ |
| exemplary embodiment 11 | 0.0035 | 0.0025 | $Li (Ni_{0.83}Co_{0.075}Mn_{0.075}Al_{0.02})_{0.994}Zr_{0.0035}Nb_{0.0025}$ |
| exemplary embodiment 12 | 0.0035 | 0.0025 | $Li (Ni_{0.84}Co_{0.07}Mn_{0.07}Al_{0.02})_{0.994}Zr_{0.0035}Nb_{0.0025}$ |
| exemplary embodiment 13 | 0.0035 | 0.0025 | $Li (Ni_{0.86}Co_{0.05}Mn_{0.07}Al_{0.02})_{0.994}Zr_{0.0035}Nb_{0.0025}$ |

**Experimental Example 1** - **XRD analysis result**

The lattice constant of the positive electrode active material prepared according to Exemplary Embodiment 1 to 5, Reference Example 1 and 2, and Comparative Example 1 was obtained by X-ray diffraction measurement using CuKa rays. The measured a-axis length, b-axis length and c-axis length are shown in Table 3 below.

In addition, the unit cell volume and crystalline size of the active material were measured and shown in Table 3 below.

Next, for crystallographic examination by doping, Rietveld analysis was performed using commercially available software, the High Score Plus 4.0 program, and the results are shown in Table 3. The XRD measurement range was performed at 10°-130°, and fitting was performed through Rietveld refinement. GOF (Goodness of Fitness) values were matched within 2.0.

XRD equipment (Panalytical's X'pert3 powder diffraction) was used to measure the intensity (peak area) of (003) and (104) planes and the intensity of (110) planes at a scan speed (°/s) of 0.328. From this result, the Full Width at Half Maximum (FWHM) of (110), and I(003)/I(104) was obtained and shown in Table 3.

In addition, in all of the measured samples, the (003) plane was well developed as the main peak around 18.7°. It was confirmed that splitting of (006)/(102) peak between 37.5° and 38.5° and (108)/(110) peak between 63.5° and 35.5° appeared. Accordingly, it was found to have good crystalline ordering of the hexagonal layer, and it was found to exhibit a typical $\alpha$-$NaFeO_2$ (space group R-3m) structure.

(Table 3)

| | a | b | c | unit cell volume | I(003)/I(104) (strength standard) | FWHM of 110 plane | Grain size (A) |
|---|---|---|---|---|---|---|---|
| Comparative Example1 | 2.8721 | 2.8721 | 14.2046 | 101.4829 | 1.2408 | 0.1886 | 1592 |

(continued)

|  | a | b | c | unit cell volume | I(003)/I(104) (strength standard) | FWHM of 110 plane | Grain size (A) |
|---|---|---|---|---|---|---|---|
| exemplary embodiment1 | 2.8722 | 2.8722 | 14.2041 | 101.4783 | 1.2406 | 0.1895 | 1432 |
| exemplary embodiment2 | 2.8723 | 2.8723 | 14.2038 | 101.4832 | 1.2405 | 0.1901 | 1336 |
| exemplary embodiments | 2.8726 | 2.8726 | 14.2041 | 101.5068 | 1.2384 | 0.1916 | 1287 |
| exemplary embodiment4 | 2.8728 | 2.8728 | 14.2050 | 101.5274 | 1.2367 | 0.1937 | 1225 |
| exemplary embodiments | 2.8731 | 2.8731 | 14.2052 | 101.5451 | 1.2347 | 0.2041 | 1050 |
| Reference example 1 | 2.8721 | 2.8721 | 14.2051 | 101.4784 | 1.2311 | 0.2231 | 783 |
| Reference example 2 | 2.8719 | 2.8719 | 14.2052 | 101.4650 | 1.2308 | 0.2543 | 664 |

Referring to Table 3, it can be seen that the factor values of the XRD analysis result crystal structure are changed according to the doping element and doping amount.

Specifically, when compared to the positive electrode active material of Comparative Example 1 in which Zr and Al are doped in the NCM active material, Zr and Nb are doped in NCMA, but as the doping amount of Nb increases, the full-width at half maximum (FWHM) of (110) planes in the positive electrode active material increases and it can be confirmed that the crystal grain size decreases.

In addition, it was found that the values of the crystal structure constants a, b, and c and the value of the unit cell volume had maximum values in Example 5. It was found that the intensity ratio of (003)/(104), which represents the cation mixing index, decreased as the doping amount of Nb increased. This phenomenon is thought to be due to the weakening of the peak intensity for the (003) plane representing the Li site on the XRD peak because Nb is doped at the lithium site. However, as a result of increasing a and c values and increasing unit cell volume in some doping compositions, it can be confirmed that there exists a region where the crystallinity of the positive electrode active material is maximized due to Nb doping.

That is, it can be confirmed that the doping amount of Nb may range from 0.0001 mol to 0.0025 mol, preferably from 0.0005 mol to 0.0025 mol.

**Experimental Example** 2 - **Electrochemical evaluation**

**(1) coin-type half-cell fabrication**

After manufacturing a CR2032 coin cell using the positive electrode active material manufactured as described above, an electrochemical evaluation was conducted.

Positive electrode active material, Denka black conductive material, and polyvinylidene fluoride binder (trade name: KF1100) were mixed at a weight ratio of 92.5:3.5:4, and this mixture was added to N-Methyl-2-pyrrolidone solvent to have a solid content of about 30 wt% to prepare a positive electrode active material slurry.

The slurry was coated on aluminum foil (Al foil, thickness: 15 $\mu$m), which is a positive electrode current collector, using a doctor blade (Doctor blade), dried, and rolled to prepare a positive electrode. The loading amount of the positive electrode was 14.6 mg/cm$^2$, and the rolling density was 3.1 g/cm$^3$.

A 2032 coin-type half cell was prepared by a conventional method using the positive electrode, lithium metal negative electrode (300$\mu$m, MTI), electrolyte solution and polypropylene separator. The electrolyte solution is the product obtained by dissolving 1M LiPF$_6$ in a mixed solvent of ethylene carbonate (EC), dimethyl carbonate (DMC) and ethylmethyl carbonate (EMC) (mixing ratio EC:DMC:EMC=3:4:3 volume ratio), and 3 wt% of vinylene carbonate was added to 100 wt% of the entire solution.

**(2) Evaluation of charge and discharge characteristics**

After aging the prepared coin-type half cell at room temperature 25 °C for 10 hours, charging and discharging were performed.

The capacity evaluation was based on 205mAh/g, and the charge and discharge conditions were constant current (CC) / constant voltage (CV) 2.5V to 4.25V, and 1/20C cut-off.

For initial capacity, discharge capacity was measured after 0.1C charge/0.1C discharge, and initial efficiency was calculated after 0.2C charge/0.2C discharge, and the results are shown in Table 4 below.

**(3) Cycle-life characteristic measurement**

The room temperature cycle-life characteristic was measured at room temperature 25°C, and the high temperature cycle-life characteristic was measured 30 times in 0.3C charge/0.3C discharge condition at high temperature 45°C.

**(4) Resistance characteristic measurement**

The room temperature initial resistance (DC internal resistance: Direct current internal resistance (DC-IR)) is the constant current-constant voltage 2.5V to 4.25V at 25°C, 1/20C cut-off condition, 0.2C charging and 0.2 discharge discharge was performed once, and the voltage value was measured 60 seconds after applying the discharge current at 4.25V charge 100%, and then it was calculated.

The resistance increase rate is measured in the same way as the initial resistance measurement method after 30 cycle compared to the resistance initially measured at room temperature 25°C (room temperature initial resistance), and the increase rate is converted into percentage (%).

The average leakage current was measured by a method in which current generation was measured for 120 hours and then the average value was obtained, when the half cell was maintained at 4.7V at a high temperature of 45 °C.

**(5) Thermal stability evaluation**

In the differential scanning calorimetry (DSC) analysis, after charging the half cell from the initial 0.1C charging condition to 4.25V, the half cell is disassembled to obtain only the positive electrode separately, and the positive electrode is washed 5 times with dimethyl carbonate. After impregnation of the positive electrode washed in the crucible for DSC with electrolyte solution, while raising the temperature to 265 °C, the DSC peak temperature and calorific value result obtained by measuring the caloric change using Mettler Toledo's DSC1 star system as a DSC device.

**Experimental Example 2-1. Whether or not Nb is included and the effect according to the content**

Table 4 shows the electrochemical characteristic evaluation results performed by the method of Experimental Example 2 for the positive electrode active material manufactured according to Exemplary Embodiment 1 to 5, Reference Example 1 to 2 and Comparative Example 1.

(Table 4)

| | discharge capacity (mAh/g) | Initial efficiency (%) | room temperature cycle-life (%) | High temperature cycle-life (%) | room temperature initial resistance ($\Omega$) | Resistance increase rate (%) | average leakage current (mA) | DSC peak temperature (°C) |
|---|---|---|---|---|---|---|---|---|
| Comparative Example1 | 213.7 | 90.9 | 92.4 | 92.1 | 29.3 | 79.8 | 0.37 | 228 |
| exemplary embodiment1 | 215.6 | 92.3 | 92.7 | 92.4 | 27.2 | 73.1 | 0.72 | 222 |
| exemplary embodiment2 | 217.4 | 93.4 | 92.8 | 92.6 | 26.4 | 69.4 | 0.64 | 223 |
| exemplary embodiments | 218.6 | 94.0 | 94.1 | 94.0 | 24.7 | 48.2 | 0.27 | 226 |
| exemplary embodiment4 | 219.5 | 94.4 | 94.6 | 93.7 | 24.3 | 45.7 | 0.24 | 228 |
| exemplary embodiments | 220.3 | 94.7 | 95.2 | 94.9 | 22.6 | 41.3 | 0.20 | 228 |
| Reference example 1 | 216.4 | 93.0 | 94.3 | 94.2 | 26.7 | 74.3 | 0.20 | 230 |
| Reference example 2 | 210.7 | 90.6 | 92.4 | 92.4 | 34.2 | 130.2 | 0.20 | 230 |

In Exemplary Embodiment 1 to 5 and Reference Examples 1 to 2, when an Al raw material is mixed with a precursor having a Ni content of 90 mol% or more and Zr and Nb are doped together, electrochemical characteristics according to the doping amount are measured.

Referring to Table 4, while preparing NCMA positive electrode active material by mixing Al raw material with NCM precursor, the positive electrode active material of embodiment 1 to 5 doped with Zr and Nb is the discharge capacity and initial capacity greatly increase, compared to the NCM doped Zr with 2 mol% of Al in a positive electrode active material of Comparative Example 1,

In addition, it can be seen that room temperature cycle-life, high temperature cycle-life, resistance increase rate, and average leakage current value are all improved when Nb is doped with Zr as in Example Embodiments 1 to 5.

It can be seen that this significantly improves the rapid discharge capacity reduction and initial efficiency reduction, which are problems in the conventional positive electrode active material doped with Al and Zr by adding 0.01 mol or more of Al.

Particularly, in the case of exemplary embodiment 3 to exemplary embodiment 5 in which the Nb content is in the range of 0.0001 mol to 0.0025 mol, discharge capacity, it can be seen that the improvement of initial efficiency, room temperature cycle-life, high temperature cycle-life, room temperature resistance, resistance increase rate, leakage current and DSC peak temperature is significantly improved compared to Comparative Example 1.

**Experimental Example 2-2. Effects of Zr content**

Table 5 shows the electrochemical characteristic evaluation results performed by the method of Experimental Example 2 for the positive electrode active material prepared according to Exemplary Embodiment 6 to 7 and Reference Example 3. For comparison, the result of Example 5 is also displayed.

(Table 5)

| | discharge capacity (mAh/g) | Initial efficiency (%) | room temperature cycle-life (%) | High temperature cycle-life (%) | room temperature initial resistance ($\Omega$) | Resistance increase rate (%) | average leakage current (mA) | DSC peak temperature (℃) |
|---|---|---|---|---|---|---|---|---|
| exemplary embodiments | 220.3 | 94.6 | 91.6 | 92.1 | 26.5 | 69.7 | 0.37 | 225 |
| exemplary embodiments | 220.3 | 94.7 | 95.2 | 94.9 | 22.6 | 41.3 | 0.20 | 228 |
| exemplary embodiment7 | 217.2 | 93.2 | 95.2 | 94.8 | 30.0 | 43.7 | 0.21 | 229 |
| Reference example 3 | 207.6 | 87.2 | 96.1 | 95.8 | 34.8 | 66.1 | 0.23 | 229 |

In exemplary embodiment 6 to 7 and reference example 3, only the doping amount of Zr was changed while the amount of aluminum raw material introduced was fixed at 0.02 mol and the doping amount of Nb was fixed at 0.0025 mol.

Referring to Table 5, it can be understood that as the doping amount of Zr increases from 0.002 mol to 0.008 mol, some characteristics are improved and some characteristics are deteriorated.

Specifically, referring to the results of Examples 5 to 7, it can be seen that the higher the doping amount of Zr, the higher the high temperature cycle-life and the room temperature cycle-life. However, as in Reference Example 3, when the Zr doping amount is increased to 0.008 mol, it can be seen that the discharge capacity and initial efficiency are greatly deteriorated.

Therefore, in the present exemplary embodiment, the appropriate doping amount of Zr is in the range of 0.001 mol to 0.007 mol, specifically 0.002 mol to 0.005 mol or 0.0035 mol to 0.005 mol, based on 100 mol of nickel, cobalt, manganese and doping elements.

**Experimental Example 2-3. Effect according to Al content**

Table 6 shows the electrochemical characteristic evaluation results performed by the method of Experimental Example 2 for the positive electrode active materials manufactured according to Exemplary Embodiments 8 to 10 and Reference Examples 4 to 5. For comparison, the result of Example 5 is also displayed.

(Table 6)

| | discharge capacity (mAh/g) | Initial efficiency (%) | room temperature cycle-life (%) | High temperature cycle-life (%) | room temperature initial resistance (Ω) | Resistance increase rate (%) | average leakage current (mA) | DSC peak temperature (°C) |
|---|---|---|---|---|---|---|---|---|
| Reference example 4 | 223.0 | 95.1 | 89.7 | 89.6 | 27.6 | 83.9 | 0.53 | 220.1 |
| exemplary embodiments | 222.0 | 94.9 | 92.2 | 92.6 | 24.2 | 56.2 | 0.32 | 225.0 |
| exemplary embodiment9 | 220.0 | 94.7 | 96.2 | 93.3 | 25.4 | 51.2 | 0.27 | 227.0 |
| exemplary embodiments | 220.3 | 94.7 | 95.2 | 94.9 | 22.6 | 41.3 | 0.20 | 228.0 |
| exemplary embodiment10 | 218.3 | 93.8 | 96.8 | 96.4 | 21.3 | 37.6 | 0.19 | 231.4 |
| Reference example 5 | 210.3 | 86.4 | 96.6 | 97.2 | 20.4 | 36.4 | 0.17 | 233.0 |

In Exemplary Embodiment 8 to 10 and Reference Examples 4 to 5, only the amount of the Al raw material was changed while the doping amount was fixed at 0.0035 mol of Zr and 0.0025 mol of Nb.

Referring to Table 6, as the amount of Al raw material increases from 0.005 mole to 0.03 mole, the room temperature cycle-life and high temperature cycle-life increase significantly, and it can be seen that the room temperature initial resistance, resistance increase rate, and leakage current decrease, and the DSC peak the temperature increases.

Specifically, the capacity decrease tended to occur as the amount of the Al raw material increased, but the initial efficiency of the positive electrode active material of Examples 8 to 10 in which the amount of the Al raw material was 0.01 mol or more was increased to 93% or more by doping with Nb.

In addition, as shown in Comparative Example 1 in Table 2, it can be seen that the initial efficiency is about 90% when Nb is not doped, whereas the initial efficiency is greatly improved by Nb doping.

However, in the case of Reference Example 4 in which the amount of the Al raw material to be mixed is 0.005 mol, it can be seen that the DSC peak temperature is very low at the level of 220@@@°C, and the room temperature cycle-life and high temperature cycle-life are significantly lowered. In addition, in the case of Reference Example 5 in which the amount of Al raw material is 0.03 mol, it can be seen that the discharge capacity is greatly reduced, and thus the initial efficiency is also significantly deteriorated.

Accordingly, in the present exemplary embodiment, the amount of the aluminum raw material may range from 0.008 moles to 0.029 moles, more specifically, from 0.01 moles to 0.025 moles, based on 100 moles of nickel, cobalt, manganese and aluminum.

## Experimental Example 2-4. Effects of Ni content

Table 7 shows the electrochemical characteristic evaluation results performed by the method of Experimental Example 2 for the positive electrode active materials prepared according to Comparative Example 2 to 6, Reference Examples 6 to 7 and Example Embodiments 11 to 13. For comparison, the results of Comparative Example 1 and Example Embodiment 5 are also displayed.

(Table 7)

| | discharge capacity (mAh/g) | Initial efficiency (%) | room temperaturecy cle-life (%) | High temperature cycle-life (%) | room temperature initial resistance ($\Omega$) | Resistance increase rate (%) | average leakage current (mA) |
|---|---|---|---|---|---|---|---|
| Comparative Example2 (Ni78%) | 200.2 | 87.9 | 95.3 | 95.4 | 14.2 | 43.73 | 0.20 |
| Reference example 6 | 197.8 | 86.8 | 96.9 | 95.3 | 16.0 | 42.84 | 0.21 |
| Comparative Examples (Ni81 %) | 204.0 | 88.1 | 94.3 | 93.9 | 16.1 | 47.90 | 0.20 |
| Reference example 7 | 203.2 | 87.6 | 94.5 | 94.3 | 19.9 | 48.79 | 0.24 |
| Comparative Example4 (Ni83%) | 207.4 | 87.7 | 94.4 | 94.3 | 24.1 | 61.18 | 0.23 |
| exemplary embodiment1 1 | 210.5 | 89.5 | 95.5 | 95.4 | 21.9 | 44.92 | 0.21 |
| Comparative Examples (Ni84%) | 208.4 | 89.6 | 92.9 | 92.4 | 26.0 | 77.45 | 0.28 |
| exemplary embodiment1 2 | 211.7 | 91.8 | 95.3 | 95.1 | 22.2 | 47.90 | 0.23 |
| Comparative Examples (Ni86%) | 213.5 | 90.4 | 93.9 | 93.3 | 29.8 | 96.49 | 0.31 |
| exemplary embodiment1 3 | 218.8 | 92.6 | 95.5 | 95.3 | 24.0 | 45.3 | 0.21 |
| Comparative Example1 (Ni92%) | 213.7 | 91.9 | 92.4 | 92.1 | 29.3 | 79.8 | 0.37 |
| exemplary embodiments | 220.3 | 94.7 | 95.2 | 94.9 | 22.6 | 41.3 | 0.23 |

EP 4 266 423 A1

Comparative Examples 1 to 6 are positive electrode active materials in which NCM precursors are doped with Zr and Al, and Reference Examples 6 to 7 and Examples 11 to 13 are positive electrode active materials prepared by mixing NCM precursors with Al materials and Zr and Nb doping materials.

Referring to Table 7, when the Ni content is less than 83%, as in Reference Examples 6 and 7, it can be seen that the discharge capacity and initial efficiency are significantly reduced when Nb is added.

On the other hand, from 83% or more of Ni, the discharge capacity and initial efficiency can be greatly increased according to the addition of Nb.

This is because the resistance characteristic of Nb itself is higher than the resistance that occurs when the Ni content is small, but is lower than the resistance characteristic that appears as the Ni content increases. For this reason, it is thought that this is because there is an effect of offsetting the rapid resistance increase effect generated at 83% or more of Ni. That is, in the case of a high-nickel NCM positive electrode material, it can be considered that the rapid resistance increase phenomenon caused by the increase of Ni can be suppressed to some extent by being doped with Nb. Due to this, it can be seen that the high temperature cycle-life and room temperature cycle-life, and the resistance increase rate are also improved overall. In conclusion, in NCMA products with a Ni content of 83% or more, when the binary material containing Nb is doped, the effect of increasing the discharge capacity and initial efficiency is very excellent, and it can be confirmed that other properties are also improved overall.

**Experimental Example 3 - Diffusion coefficient and impedance analysis**

Diffusion coefficient and impedance analysis was performed on the positive electrode active material prepared according to Exemplary Embodiment 1 to 5, Reference Example 1 to 2 and Comparative Example 1, and the results are shown in Table 8 below.

The diffusion coefficient was measured by the GITT method, and after 30 minutes of charging, 50 minutes of maintenance was performed, and the data obtained at this time were analyzed using Equation 2 below.

[Equation 2]

$$ D = \frac{4}{\pi} \left( \frac{V_M I_0}{AF Z_{Li}} \right)^2 \left[ \left( \frac{dE_s}{dx} \right) / \left( \frac{dE_t}{d\sqrt{t}} \right) \right]^2 $$

In Equation 2,

$V_M$: molar volume of positive electrode active material
A: electrode area when measuring diffusion coefficient
F: Faraday constant
$Z_{Li}$: +1
$I_0$: 0.1C
x: fraction in which lithium is present in the electrode
$dE_s$: voltage change obtained in the maintaining section,
dEt: Voltage change obtained in the charging section
t: time (sec)

Specifically, the molar volume of the positive electrode active material was calculated using the unit volume analyzed through XRD measurement results. A is the electrode area when measuring the diffusion coefficient. In the case of the coin cell used in this diffusion coefficient measurement, the area has a size of 1.538 cm$^2$. $I_0$ means 0.1C current value. X can be calculated assuming that the entire charge and discharge section is 100%. For example, x corresponding to the initial 30-minute charging section can be expressed as 0.05, x corresponding to the second 30-minute charging section can be expressed as 0.1, and x corresponding to the middle section can be expressed as 0.5.

Impedance analysis was analyzed using the impedance graph obtained at 3.7V, and is shown in Table 8 like the diffusion coefficient. When Nyquist plot was performed by separating the obtained impedance value into the real axis and the imaginary axis, the figure obtained was divided into two semicircles and fitted to obtain $R_{sei}$ and $R_{ct}$. At this time, the resistance value obtained by the semicircle generated in the high frequency region was named $R_{sei}$, and the resistance value obtained by the semicircle generated in the low frequency region was named $R_{ct}$ to obtain the resistance value.

(Table 8)

| | initial diffusion coefficient ($*10^{-9}m^2/sec$) | initial Rsei ($\Omega$) | initial Ret ($\Omega$) | diffusion coefficient after cycle ($*10^9m^2/sec$ ) | Rsei after cycle ($\Omega$) | Ret after cycle ($\Omega$) | diffusion coefficient increase rate (%) | Rsei increase rate (%) | Rct increase rate (%) |
|---|---|---|---|---|---|---|---|---|---|
| Comparative Example1 | 7.24 | 1.22 | 4.62 | 5.96 | 11.90 | 8.88 | 17.65 | 871.99 | 92.16 |
| exemplary embodiment 1 | 7.57 | 1.43 | 4.40 | 6.36 | 11.65 | 7.63 | 15.98 | 717.40 | 73.38 |
| exemplary embodiment 2 | 7.60 | 1.51 | 4.64 | 6.45 | 11.61 | 5.74 | 15.08 | 667.82 | 23.50 |
| exemplary embodiment 3 | 7.86 | 1.81 | 4.72 | 6.77 | 10.24 | 5.01 | 13.92 | 466.94 | 6.21 |
| exemplary embodiment 4 | 7.92 | 1.90 | 4.30 | 6.83 | 10.30 | 4.60 | 13.81 | 442.11 | 6.98 |
| exemplary embodiment 5 | 8.05 | 2.09 | 4.58 | 6.95 | 9.97 | 4.89 | 13.70 | 376.03 | 6.68 |
| Reference example 1 | 7.86 | 2.63 | 4.77 | 6.81 | 10.44 | 5.35 | 13.32 | 296.53 | 12.16 |
| Reference example 2 | 6.92 | 3.84 | 5.00 | 5.85 | 12.58 | 6.17 | 15.45 | 227.55 | 23.33 |

As a result of measuring the diffusion coefficient based on the Equation 2, as shown in the Table 8, in most cases it was confirmed to have an order of $10^{-9}$.

In addition, it can be confirmed that there is a region in which the diffusion coefficient is increased in the exemplary embodiment as Nb is additionally doped, and it can be confirmed that the diffusion coefficient is increased to a certain level when Nb is additionally doped compared to Comparative Example. The phenomenon that the diffusion coefficient is increased by being doped with Nb, means that Nb is introduced into the positive electrode material to promote the movement of Li in the positive electrode material. As a result, the effect of improving the rate characteristic and initial capacity can be appeared. However, when too much Nb is doped, the movement of Li is rather hindered, and the diffusion coefficient and rate characteristic and capacity characteristic are also lowered. Therefore, in Reference Examples 1 and 2 in which 0.005 mol and 0.01 mol of Nb were doped, respectively, it can be seen that the diffusion coefficient is slightly reduced.

On the other hand, referring to Table 6 in relation to impedance measurement values, in the case of Example Embodiments 1 to 5 in which a binary doping material was applied to NCMA, the initial values of $R_{sei}$ and $R_{ct}$ were found to be higher than those of Comparative Example 1. However, it can be seen that the resistance increase rate after the cycle, related to the cycle-life characteristic is rather low in the case of the positive electrode active material of Examples 1 to 5 compared to Comparative Example 1. That is, it can be confirmed that the resistance increase rates of $R_{sei}$ and $R_{ct}$ are effectively suppressed when binary doping including Nb is applied to NCMA.

Particularly, as shown in Table 6, in the case of the positive electrode active material prepared according to exemplary embodiments 3 to 5, the resistance increase rate of $R_{sei}$ and $R_{ct}$ is significantly improved.

Therefore, when referring to the diffusion coefficient and impedance measurement result values, the appropriate doping amount of Nb in the present exemplary embodiment ranges from 0.00005 mol to 0.03 mol, specifically 0.0001 mol to 0.01 mole or 0.0005 mole to 0.0025 mole with respect to 100 mol of nickel, cobalt, manganese and doping elements.

In addition, when looking at the resistance characteristics shown in Table 6, it can be seen that the initial $R_{sei}$ and $R_{ct}$ values are slightly increased compared to Comparative Example 1 when the Nb doping amount is 0.0005 mol to 0.0025 mol. However, after the cycle, it can be confirmed that the increase values in $R_{ct}$ value and $R_{sei}$ value is greatly reduced compared to Comparative Example 1 of that. That is, when Nb is doped into the positive electrode material, the surface characteristic is improved, and the side reaction between the electrolyte and the positive electrode is suppressed, and it can be confirmed that the increase in resistance is not large after the high temperature cycle.

In addition, in the characteristic of initial resistance shown in Table 2, when Nb is added, the initial resistance decreases, which is confirmed that Nb effectively contributes to Li movement under high voltage on the characteristic of initial voltage measured under high voltage. Looking at the result of the resistance characteristic above, it can be seen that it is possible to suppress the initial output improvement and deterioration phenomenon when doping with appropriate Nb.

The present invention is not limited to the exemplary embodiment, but can be manufactured in a variety of different forms, and a person of an ordinary skill in the technical field to which the present invention belongs does not change the technical idea or essential characteristics of the present invention. It will be appreciated that it may be embodied in other specific forms. Therefore, the exemplary embodiment described above should be understood as illustrative in all respects and not limiting.

**Claims**

1.  A positive electrode active material for lithium secondary battery, comprising:

    a metal oxide particle including nickel, cobalt, manganese and aluminum; and
    two doping elements doped into the metal oxide particle.

2.  The positive electrode active material of claim 1, wherein:
    the two doping elements are Nb and Zr.

3.  The positive electrode active material of claim 2, wherein:
    a doping amount of the Nb is 0.0001 mol to 0.01 mol, based on 1 mol of the total of nickel, cobalt, manganese, aluminum and doping elements.

4.  The positive electrode active material of claim 2, wherein:
    a doping amount of the Zr is 0.001 mol to 0.007 mol, based on 1 mol of the total of nickel, cobalt, manganese, aluminum and doping elements.

**5.** The positive electrode active material of claim 2, wherein:
a doping amount of the Nb and Zr satisfies the relationship of Equation 1 below.

$$[\text{Equation 1}]$$

$$0.3 < [\text{Zr}]/[\text{Nb}] < 40$$

 (In Equation 1, [Nb] and [Zr] mean the doping amount of each element based on 1 mole of the total sum of nickel, cobalt, manganese, aluminum and doping elements)

**6.** The positive electrode active material of claim 1, wherein:
the positive electrode active material is represented by Chemical Formula 1 below.

[Chemical Formula 1]     $\text{Li}_a[\text{Ni}_x\text{Co}_y\text{Mn}_z\text{Al}_h]_{1-t}(\text{Nb}_i\text{Zr}_j)_t\text{O}_{2-p}\text{X2}_p$

(In the Chemical Formula 1,
X is one or more elements selected from the group containing F, N, and P,
a is $0.8 \leq a \leq 1.3$,
t is $0.0011 \leq t \leq 0.007$,
$0.6 \leq x \leq 0.95$, $0 < y \leq 0.2$, $0 < z \leq 0.2$, $0.008 \leq h \leq 0.029$, $0.0011 \leq i \leq 0.017$, $0.9989 \leq j \leq 0.983$, and $0 \leq p \leq 0.02$)

**7.** The positive electrode active material of claim 6, wherein:
the h is in the range of $0.01 \leq h \leq 0.025$.

**8.** The positive electrode active material of claim 1, wherein:
the initial diffusion coefficient of the positive electrode active material ranged from $7.30*10^{-9}\text{m}^2/\text{sec}$ to $8.10*10^{-9}\text{m}^2/\text{sec}$.

**9.** The positive electrode active material of claim 1, wherein: a grain size of the metal oxide particle ranges from 900A to 1,550A.

**10.** The positive electrode active material of claim 1, wherein:
a full width at half maximum (FWHM) value for (110) planes of the metal oxide particle ranges from 0.1890 to 0.2200.

**11.** The positive electrode active material of claim 1, wherein:
when measuring the X-ray diffraction pattern, the positive electrode active material has a 1.2300 to 1.2410 of I(003)/I(104), which is the ratio of the peak intensity of the (003) plane to the peak intensity of the (104) plane.

**12.** The positive electrode active material of claim 1, wherein:
the content of nickel in the metal oxide particle is 0.8 mol or more, based on 1 mol of the total of the nickel, cobalt, manganese, and aluminum.

**13.** A lithium secondary battery, comprising:

a positive electrode comprising the positive electrode active material of any one of claims 1 to 12;
a negative electrode; and
a non-aqueous electrolyte.

## INTERNATIONAL SEARCH REPORT

| International application No. |
|---|
| **PCT/KR2021/019438** |

**A. CLASSIFICATION OF SUBJECT MATTER**

**H01M 4/525**(2010.01)i; **H01M 4/505**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 4/525(2010.01); C01G 53/00(2006.01); H01M 10/052(2010.01); H01M 10/0525(2010.01); H01M 10/48(2006.01); H01M 4/485(2010.01); H01M 4/50(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 니켈(nickel), 코발트(cobalt), 망간(manganese), 알루미늄(aluminum), 도핑 (doping), 니오븀(niobium), 지르코늄(zirconium), 리튬 이차전지(lithium secondary battery), 양극 활물질(positive electrode material)

**C. DOCUMENTS CONSIDERED TO BE RELEVANT**

| Category* | Citation of document, with indication, where appropriate, of the relevant passages | Relevant to claim No. |
|---|---|---|
| X | CN 111435743 A (SVOLT ENERGY TECHNOLOGY COMPANY LIMITED) 21 July 2020 (2020-07-21)<br>See claim 1; paragraphs [0025], [0071] and [0072]; and example 3. | 1,12,13 |
| Y | | 2-11 |
| Y | KR 10-2018-0071714 A (POSCO et al.) 28 June 2018 (2018-06-28)<br>See paragraphs [0032] and [0035]. | 2-11 |
| X | CN 111422919 A (SVOLT ENERGY TECHNOLOGY COMPANY LIMITED) 17 July 2020 (2020-07-17)<br>See claims 1, 9 and 10; and example 1. | 1,12,13 |
| A | KR 10-2020-0070650 A (LG CHEM, LTD.) 18 June 2020 (2020-06-18)<br>See entire document. | 1-13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 March 2022** | **28 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2021/019438** |

### C.    DOCUMENTS CONSIDERED TO BE RELEVANT

| Category* | Citation of document, with indication, where appropriate, of the relevant passages | Relevant to claim No. |
|---|---|---|
| A | CN 101483265 A (SHENZHEN BEITERUI NEW ENERGY MATERIAL CO., LTD.) 15 July 2009 (2009-07-15)<br>    See entire document. | 1-13 |

Form PCT/ISA/210 (second sheet) (July 2019)

INTERNATIONAL SEARCH REPORT
Information on patent family members

International application No.

**PCT/KR2021/019438**

| Patent document<br>cited in search report | | | Publication date<br>(day/month/year) | Patent family member(s) | | | Publication date<br>(day/month/year) |
|---|---|---|---|---|---|---|---|
| CN | 111435743 | A | 21 July 2020 | KR | 10-2021-0134660 | A | 10 November 2021 |
| | | | | WO | 2021-121168 | A1 | 24 June 2021 |
| KR | 10-2018-0071714 | A | 28 June 2018 | None | | | |
| CN | 111422919 | A | 17 July 2020 | None | | | |
| KR | 10-2020-0070650 | A | 18 June 2020 | CN | 113169320 | A | 23 July 2021 |
| | | | | EP | 3869590 | A1 | 25 August 2021 |
| | | | | WO | 2020-122497 | A1 | 18 June 2020 |
| CN | 101483265 | A | 15 July 2009 | CN | 101483265 | B | 29 June 2011 |

Form PCT/ISA/210 (patent family annex) (July 2019)